# EUROPÄISCHE PATENTSCHRIFT

(11) **EP 1 923 552 B1**
(45) Veröffentlichungstag und Bekanntmachung des Hinweises auf die Patenterteilung: **24.07.2013**
(21) Anmeldenummer: 07120668.4
(22) Anmeldetag: 14.11.2007
(51) Int. Cl.: F02B 29/04, F02M 31/00

(54) **Temperatursteuerungseinheit**
Temperature control unit
Unité de commande de la température

(30) Priorität: 15.11.2006 DE 102006054216
(43) Veröffentlichungstag der Anmeldung: 21.05.2008
(73) Patentinhaber: MANN+HUMMEL GmbH, 71638 Ludwigsburg (DE)
(72) Erfinder: Migaud, Jérôme, 35500, Vitré (FR); Bedouet, Cécile, 53810, Change (FR); Marteau, Christophe, 53000 Laval (FR)

(56) Entgegenhaltungen:
- EP-A2- 0 080 984
- DE-A1- 4 242 010
- DE-A1- 10 130 065
- JP-A- 61 237 998

## Beschreibung

### Technisches Gebiet

Die Erfindung betrifft eine Temperatursteuerungseinheit nach dem Oberbegriff des Anspruchs 1.

### Stand der Technik

Es sind Vorrichtungen bekannt, mit welchen die Ansauglufttemperatur von Brennkraftmaschinen gesteuert werden kann. Derartige Vorrichtungen verfügen über einen Einlass und einen Auslass für die Ansaugluft. Durch den Einlass strömt Luft, welche z. B. von einem Turbolader kommt in die Vorrichtung ein. Wenn die vom Turbolader kommende Luft zu heiß ist, wird die Ansaugluft bevor sie durch den Auslass ausströmen kann, durch einen Kühler geleitet. Hierzu sind entsprechende Kühlerein- und -auslässe an der Vorrichtung angeordnet.
So zeigt der Abstract der JP-A-61237998 eine Vorrichtung zur Schaltung einer Bypass-Öffnung an einem Kühler einer aufgeladenen Brennkraftmaschine, bei der eine unterdruckbetätigte Klappe einen Strömungspfad durch einen Ladeluftkühler schaltet.

Aufgabe der Erfindung ist es, eine Temperatursteuerungseinheit zu schaffen, mit welcher die Ansauglufttemperatur einer Brennkraftmaschine steuerbar ist. Hierbei soll die Temperatursteuerungseinheit einfach und kostengünstig herstellbar sein. Diese Aufgabe wird durch die Merkmale des Anspruchs 1 gelöst.

### Offenbarung der Erfindung

Die erfindungsgemäße Temperatursteuerungseinheit weist ein Gehäuse mit einem Einlass und einem Auslass auf. Um die Temperatur der Ansaugluft für eine Brennkraftmaschine mit einem Turbolader zu steuern, sind ein Kühlerauslass und ein Kühlereinlass vorgesehen, welche mit einem Kühler verbindbar sind. Das Gehäuse mit den Ein- und Auslässen, wird vorzugsweise aus Kunststoff gefertigt, hierbei können Kunststoffe wie z. B. Polyamid, Polyethylen, Polypropylen oder andere Thermoplaste gefüllt oder ungefüllt verwendet werden. Als Füllmaterialien können z. B. Glasfasern, Graphit, Talkum oder Kohlefasern verwendet werden. Zur Umgehung des Kühlers ist ein Bypassfenster vorgesehen, welches den Einlass mit dem Auslass bei geschlossenem Kühlerauslass verbindet. Um den Kühlerauslass zu verschließen, ist eine Klappe in dem Gehäuse angeordnet, welche über einen Aktuator bewegbar ist. Der Aktuator ist z. B. als Elektromotor oder als Unterdrucksteller ausgeführt. Selbstverständlich können auch alle übrigen, im Stand der Technik bekannten Betätigungsvorrichtungen verwendet werden, um die Klappe anzutreiben. Die Klappe verfügt über eine Drehachse, welche sowohl in einem Randbereich, wie auch in einem Mittenbereich angeordnet sein kann. Bei einer Anordnung der Drehachse im Randbereich schwenkt die Klappe aus dem Strömungsquerschnitt heraus. Bei einer mittig angeordneten Drehachse verbleibt die Klappe im geöffneten Zustand im Strömungsquerschnitt und wird von der Ansaugluft umströmt. Die Klappe ist über ein Verbindungselement mit dem Aktuator verbunden. Das Verbindungselement überträgt die Bewegung des Aktuators auf die Klappe. Der Aktuator kann rotatorische oder translatorische Bewegungen ausführen.

Erfindungsgemäß besteht die Klappe überwiegend aus Kunststoff, wobei eine umlaufende Dichtung an den Rändern angeordnet ist. Durch die Dichtung liegt die Klappe dichtend an dem Gehäuse an und verhindert so, dass ein Teil der Ansaugluft durch den Kühler strömt. Die Dichtung kann z. B. auf die Klappe aufgeklebt oder aufgeschweißt sein. Bei einer bevorzugten Ausführung ist die Dichtung direkt an die Klappe angespritzt. Für die Dichtung können beliebige Elastomere verwendet werden, welche über eine geeignete Temperaturbeständigkeit verfügen. Vorzugsweise besteht die angespritzte Dichtung aus einem Silikon, welches auch bei höheren Temperaturen formstabil ist. Durch das Anspritzen der Dichtung an die Klappe können zusätzliche Montagearbeiten entfallen. Weiterhin wird eine Leckage zwischen der Klappe und der Dichtung verhindert. Die Dichtung kann beliebige Geometrien aufweisen, vorzugsweise sind Lamellen vorgesehen, welche einfach verformbar sind und sich so an Unebenheiten des Gehäuses leicht anlegen lassen. Die Dichtung kann am Außenumfang der Klappe oder an den stirnseitigen Randbereichen angeordnet sein. Somit ist eine optimale Anlage der Dichtung an der Gehäusewand gewährleistet.

Gemäß einer vorteilhaften Ausgestaltung der Erfindung durchragt das Verbindungselement bei geschlossenem Kühlerauslass das Bypassfenster und verbindet so die Klappe mit dem Aktuator. Bei geöffnetem Kühlerauslass verschließt die Klappe das Bypassfenster, wodurch der gesamte Volumenstrom durch den Kühler geleitet wird.

Bei einer besonderen Ausgestaltung der Temperatursteuerungseinheit ist der Aktuator mit seinem Drehmittelpunkt von dem Drehpunkt der Klappe beabstandet angeordnet. Somit kann der Aktuator an einer Stelle angeordnet werden, welche sich zur optimalen Bauraumausnutzung anbietet.

Bei einer weiteren Ausgestaltung der Temperatursteuerungseinheit ist der Aktuator um einen Winkel α drehbar, wobei die Drehung durch das Verbindungselement auf die Klappe übertragen wird. Die Klappe vollführt eine Drehung um einen Winkel β, der gleich oder ungleich dem Winkel α sein kann. Gemäß einer vorteilhaften Ausgestaltung ist der Winkel α des Aktuators größer, als der Winkel β, den die Klappe ausführt. Durch diese Ausgestaltung lassen sich die erforderlichen Torsionskräfte reduzieren. Durch eine geeignete Übersetzung kann somit ein Aktuator mit geringeren Leistungsdaten verwendet werden.

### Kurze Beschreibung der Zeichnungen

Weitere Einzelheiten der Erfindung werden nachfolgend anhand des Ausführungsbeispieles beschrieben. Hierbei zeigt:
- Figur 1: eine schematische Temperatursteuerungseinheit im Schnitt,
- Figur 2: eine perspektivische Darstellung der Temperatursteuerungseinheit,
- Figur 3: einen Ausschnitt aus der Temperatursteuerungseinheit gemäß Figur 2,
- Figur 4: eine Klappe in perspektivischer Ansicht,
- Figur 5: eine alternative Ausgestaltung der Temperatursteuerungseinheit und
- Figur 6: die Temperatursteuerungseinheit gemäß Figur 5 mit geschlossener Klappe.

### Ausführungsform(en) der Erfindung

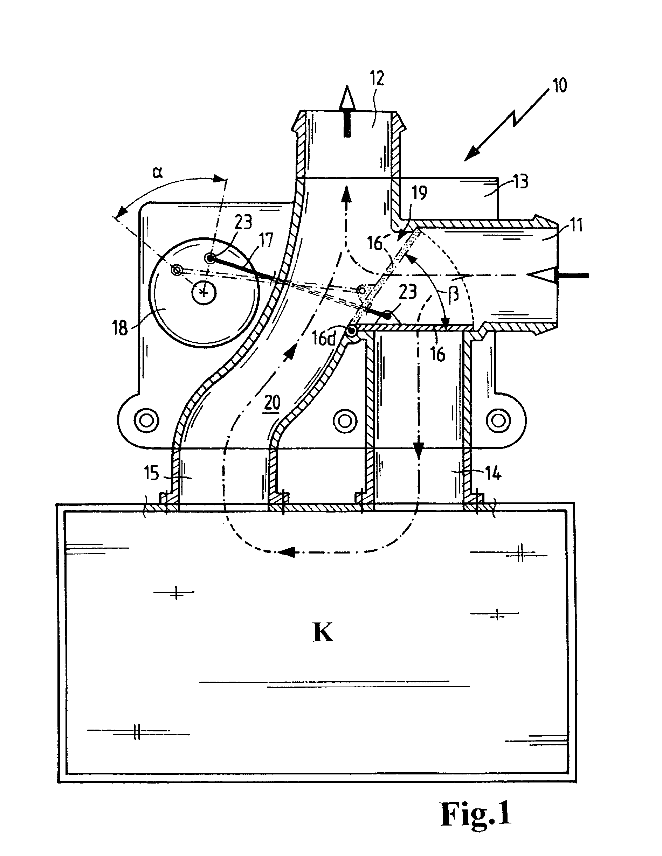

In Figur 1 ist eine Temperatursteuerungseinheit 10 im Schnitt dargestellt. Die Temperatursteuerungseinheit 10 verfügt über einen Einlass 11 und einen Auslass 12. Die Ein- bzw. Auslässe 11, 12 sind in ein Gehäuse 13 integriert. Dieses Gehäuse 13 verfügt über einen Kühlerauslass 14 und einen Kühlereinlass 15. Der Kühlerauslass 14 ist korrespondierend mit dem Einlass 11 verbunden. Der Auslass 12 ist korrespondierend mit dem Kühlereinlass 15 verbunden. Der Strömungsweg vom Einlass 11 zum Kühlerauslass 14 ist mit einer Klappe 16 verschließbar. Die Klappe 16 ist mit einem Verbindungselement 17 mit einem Aktuator 18 verbunden. Das Verbindungselement 17 ist exzentrisch auf dem Aktuator 18 angeordnet. In Abhängigkeit der Ansauglufttemperatur kann der Aktuator seine Position verändern. Durch eine Rotation des Aktuators um den Winkel α wird die Klappe 16 durch das Verbindungselement 17 um den Winkel β in eine Geschlossen- bzw. Offenposition bewegt. Bei der geschlossenen Klappe 16 ist der Kühlerauslass 14 derart verschlossen, dass die Ansaugluft nicht in einen Kühler K strömen kann. So wird eine weitere Abkühlung der Ansaugluft verhindert. Die Ansaugluft strömt bei geschlossener Klappe 16 durch ein Bypassfenster 19 hindurch, direkt zu dem Auslass 12.

Bei geöffneter Klappe 16' (strichpunktiert dargestellt) wird das Bypassfenster 19 durch die Klappe 16' verschlossen. Die Ansaugluft strömt durch den Kühlerauslass 14 in den Kühler K ein und wird dort abgekühlt, bevor sie durch den Kühlereinlass 15 wieder in die Temperatursteuerungseinheit 10 einströmen kann. Von dem Kühlereinlass 15 strömt die gekühlte Ansaugluft durch einen Kanal 20 zu dem Auslass 12 (strichpunktierte Pfeilrichtung).

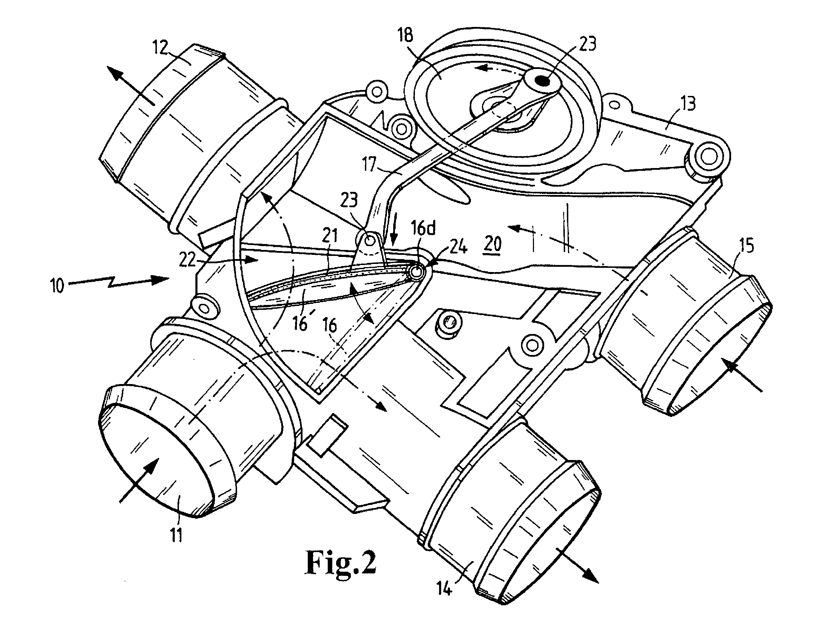

In Figur 2 ist eine Temperatursteuerungseinheit 10 perspektivischer Ansicht ohne einen Abdeckdeckel dargestellt. Der Figur 1 entsprechende Bauteile sind mit gleichen Bezugszeichen versehen. Die Klappe 16 ist in geöffnetem Zustand dargestellt, so dass die Ansaugluft durch den Einlass 11 direkt zu dem Kühlerauslass 14 strömen kann. Die Klappe 16 bildet einen Teil der Strömungswand so dass die Ansaugluft um 90° umgelenkt werden kann. An dem Außenumfang der Klappe 16 sind Lippendichtungen 21 angeordnet, welche über die Flächen der Klappe 16 hinausragen und so dichtend an Wandungen 22 des Gehäuses 13 anliegen. Das Verbindungselement 17 ist als gebogener Hebel ausgebildet. Der Hebel 17 ist einerseits mit der Klappe 16 und andererseits exzentrisch mit dem Aktuator 18 verbunden. An den Verbindungsstellen 23 kann der Hebel 17 Relativbewegungen zu seinen Fügepartnern 16 und 18 ausführen. Hierzu verfügt der Hebel 17 beidseitig über Bohrungen in welchen Zapfen drehbar gelagert sind. Ein Zapfen ist mit dem Aktuator und der andere Zapfen mit der Klappe verbunden. Die Klappe 16 ist mit ihrem, im Randbereich angeordneten Drehmittelpunkt d in Gleitlagern 24 gelagert.

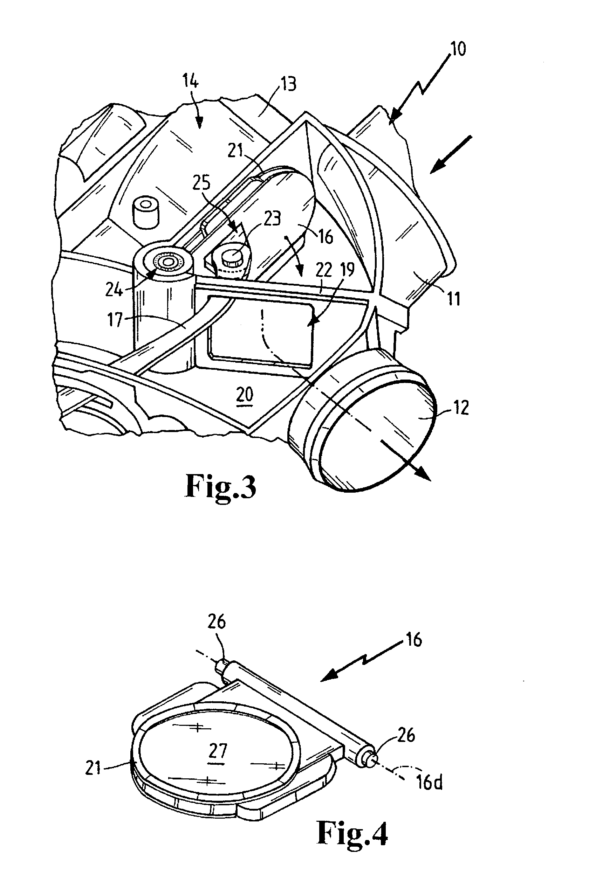

In Figur 3 ist ein Ausschnitt der Temperatursteuerungseinheit 10 gemäß Figur 2 dargestellt. Im Unterschied zur Figur 2 ist die Klappe 16 im geschlossenen Zustand dargestellt und verschließt so den Kühlerauslass 14. In dieser Stellung gibt die Klappe 16 das Bypassfenster 19 frei, so dass die Ansaugluft, welche durch den Einlass 11 in die Temperatursteuerungseinheit 10 einströmt direkt zu dem Auslass 12 geleitet wird und dort aus der Temperatursteuerungseinheit austreten kann. Die Klappe 16 verfügt über einen angeformten Lagerdom 25, an welchem das Verbindungselement 17 drehbar gelagert ist. Der Lagerdom 25 ist aus demselben Material wie die Klappe 16 gefertigt. Vorzugsweise kann die Klappe 16 im Spritzgussverfahren hergestellt werden, wodurch weitere Nacharbeiten an der Klappe 16 entfallen.

In Figur 4 ist die Klappe 16 in perspektivischer Ansicht dargestellt. Die Klappe 16 ist als Schwenkklappe ausgebildet, welche über eine im Randbereich angeordnete Drehachse d verfügt. Um die Klappe 16 in dem Gehäuse 13 gemäß den vorangehenden Figuren einzubauen, sind Lagerzapfen 26 vorgesehen, welche in die Gleitlager 24 gemäß Figur 2 und 3 eingreifen. Die Klappe 16 besteht aus einem Thermoplast, an welchem Lippendichtungen 21 direkt angeformt sind. Die Lippendichtung 21 umgibt einen kreisförmigen Innenbereich 27 der Klappe 16. Hierbei steht die Lippendichtung 21 über das Material des Innenbereichs 27 über, so dass die Lippendichtung 21 direkt an die Wandungen 22 des Gehäuses 13 anliegen können. Bei anderen Ausgestaltungen kann die Lippendichtung 21 z. B. auch als einfacher Dichtwulst oder Profildichtung ausgestaltet sein. Die Klappe 16 mit der angespritzten Dichtung 21 ist einfach und kostengünstig herstellbar.

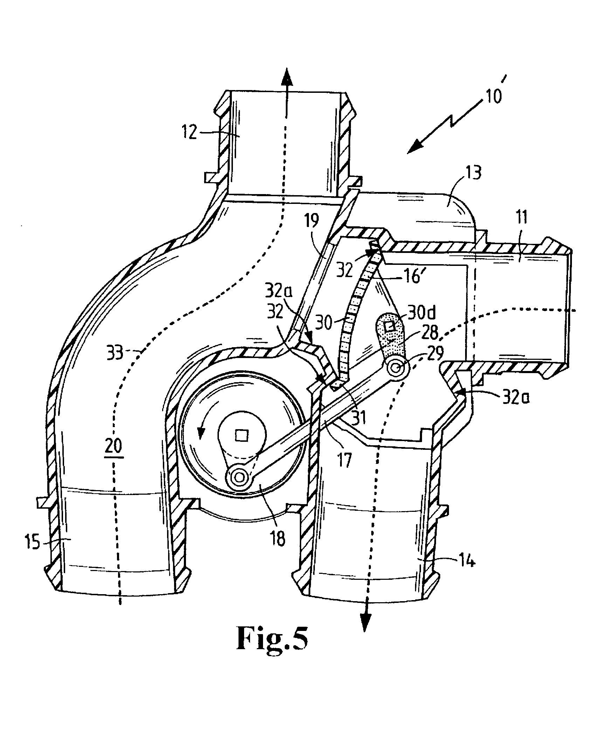

Die alternative Ausgestaltung gemäß Figur 5 zeigt eine Temperatursteuerungseinheit 10. Gleiche Teile sind hier mit gleichen Bezugszeichen versehen. Die Einheit wird gemäß der gepunktet dargestellten Linie 33 vom Kühlereinlass 15 zum Auslass 12 durchströmt. Eine Klappenwandung 30 verschließt diesen Durchlass bezüglich des Einlasses 11.

Die Klappenwandung 30 ist an einer Achse (d) gelagert und mit einem Übersetzungshebel 28 verbunden. Dieser Hebel ist über einen Lagerzapfen 29 mit einem Verbindungselement 17 gekoppelt. Der Hebel 17 ist an einem Aktuator 18, befestigt. Der Aktuator weist einen Schwenkbereich von etwa 90° auf.

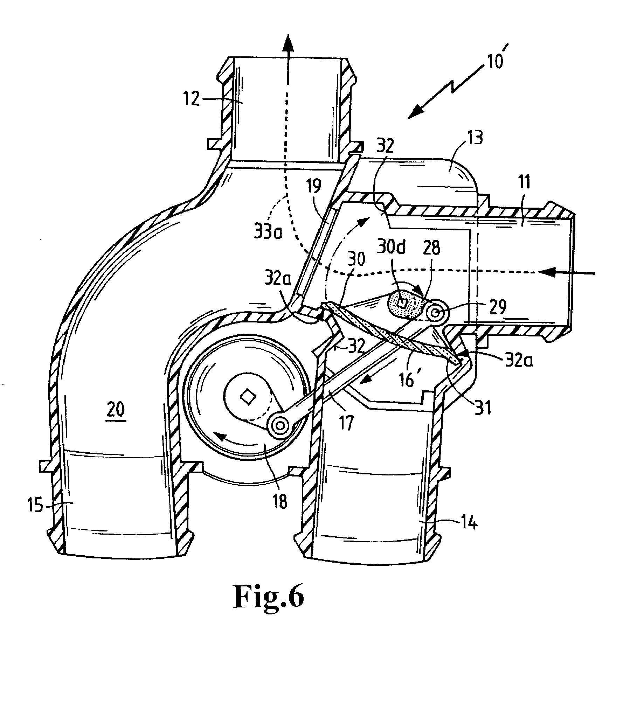

Ein Umschalten über den Aktuator bewirkt - wie in Figur 6 gezeigt - ein Schwenken der Klappenwandung 30 in Richtung des Kühlerauslasses 14 und verschließt damit den Kühlerauslass 14. Gleichzeitig öffnet der Einlass 11 sodass die Luft durch die Öffnung zu dem Auslass 12 strömen kann. Sowohl der Kühlerauslass 14 als auch der Einlass 11 sind in dem Bereich der Abdichtung für die Klappenwandung 30 mit Vorsprüngen 32, 32a versehen, an welchen die Klappenwandung in ihrer jeweiligen Endstellung anliegt.

Das Gehäuse 13 besteht in bevorzugter Weise aus Kunststoff und ist im Spritzgußverfahren hergestellt. Die Klappenwandung 30 besteht ebenfalls aus Kunststoff und kann zur Verbesserung der Dichtheit im 2K-Verfahren hergestellt sein, wobei die zweite Komponente eine Dichtkomponente ist, die an den Vorsprüngen 32, 32a für die entsprechende Abdichtung sorgt.

## Patentansprüche

1. Temperatursteuerungseinheit (10) für die Ansaugluft einer Brennkraftmaschine mit einem Turbolader, aufweisend ein Gehäuse (13), welches über einen Einlass (11), einen Auslass (12), einen Kühlerauslass (14), einen Kühlereinlass (15) und ein Bypassfenster (19) verfügt, wobei eine Klappe (16) derart in dem Gehäuse (13) angeordnet ist, dass der Kühlerauslass (14) durch die Klappe (16) öffen- und verschließbar ist, wobei der Einlass (11) bei geschlossenem Kühlerauslass (14) durch das Bypassfenster (19) mit dem Auslass (12) korrespondiert, wobei ein Aktuator (18) vorgesehen ist, welcher über ein Verbindungselement (17) mit der Klappe (16) verbunden ist, **dadurch gekennzeichnet, dass** die Klappe (16) überwiegend aus Kunststoff besteht und über eine umlaufende Dichtung (21) verfügt.

2. Temperatursteuerungseinheit nach Anspruch 1, **dadurch gekennzeichnet, dass** die Dichtung (21) aus einem Elastomer besteht, wobei die Dichtung (21) an die Klappe (16) angespritzt ist.

3. Temperatursteuerungseinheit nach einem der vorangehenden Ansprüche, **dadurch gekennzeichnet, dass** das Verbindungselement (17) bei geschlossenem Kühlerauslass (14) durch das Bypassfenster (19) hindurchragt.

4. Temperatursteuerungseinheit nach einem der vorangehenden Ansprüche, **dadurch gekennzeichnet, dass** der Aktuator (18) über einen Drehmittelpunkt D verfügt, welcher von einem Drehpunkt der Klappe (16) beabstandet ist.

5. Temperatursteuerungseinheit nach einem der vorangehenden Ansprüche, **dadurch gekennzeichnet, dass** der Aktuator (18) um einen Winkel α drehbar und die Drehung durch das Verbindungselement (17) auf die Klappe (16) übertragbar ist, derart dass die Klappe (16) eine Drehung um einen Winkel β ausführt.

6. Temperatursteuerungseinheit nach Anspruch 5, **dadurch gekennzeichnet, dass** der Winkel α des Aktuators (18) größer ist, als der Winkel β der Klappe.

## Claims

1. Temperature control unit (10) for the intake air of an internal combustion engine with a turbocharger, featuring a housing (13) which has an inlet (11), an outlet (12), a cooler outlet (14), a cooler inlet (15) and a bypass window (19), a flap (16) being disposed in the housing (13) in such a way that the cooler outlet (14) is openable and closable by the flap, the inlet (11) corresponding with the outlet (12) through the bypass window (19) when the cooler outlet (14) is closed, an actuator (18) being provided which is connected with the flap (16) via a connecting element (17), **characterized in that** the flap (16) mainly consists of synthetic material and has a circumferential sealing (21).

2. Temperature control unit according to claim 1, **characterized in that** the sealing (21) consists of an elastomer, the sealing (21) being injection molded to the flap (16).

3. Temperature control unit according to one of the above claims, **characterized in that** the connecting element (17) protrudes through the bypass window (19) when the cooler outlet (14) is closed.

4. Temperature control unit according to one of the above claims, **characterized in that** the actuator (18) has a center of rotation D which is spaced from a pivotal point of the flap (16).

5. Temperature control unit according to one of the above claims, **characterized in that** the actuator (18) is rotatable by an angle α and that the rotation is transferrable to the flap (16) by the connecting element (17) in such a way that the flap (16) performs a rotation by an angle ß.

6. Temperature control unit according to claim 5, **characterized in that** the angle α of the actuator (18) is larger than the angle ß of the flap.

## Revendications

1. Unité de commande de température (10) pour l'air d'aspiration d'un moteur à combustion interne avec un turbocompresseur, présentant un boîtier (13) qui dispose d'une entrée (11), d'une sortie (12), d'une sortie de radiateur (14), d'une entrée de radiateur et d'une fenêtre de dérivation (19), un clapet (16) étant placé dans le boîtier (13) de manière à ce que la sortie de radiateur (14) puisse être ouverte et fermée au moyen du clapet, l'entrée (11) correspondant avec la sortie (12), lorsque la sortie de radiateur (14) est fermée, à travers la fenêtre de dérivation (19), un actionneur (18) relié au clapet (16) par un élément de jonction (17) étant prévu, **caractérisée en ce que** le clapet (16) est en majeure partie constitué de matière plastique et comporte un joint périphérique (21).

2. Unité de commande de température selon la revendication 1, **caractérisée en ce que** le joint (21) est constitué d'un élastomère, le joint (21) étant injecté sur le clapet (16).

3. Unité de commande de température selon l'une des revendications précédentes, **caractérisée en ce que** l'élément de jonction (17) traverse la fenêtre de dérivation (19) lorsque la sortie de radiateur (14) est fermée.

4. Unité de commande de température selon l'une des revendications précédentes, **caractérisée en ce que** l'actionneur (18) dispose d'un centre de rotation D situé à une certaine distance d'un point de rotation du clapet (16).

5. Unité de commande de température selon l'une des revendications précédentes, **caractérisée en ce que** l'actionneur (18) peut tourner d'un angle α et que la rotation peut être transférée au clapet (16) par l'élément de jonction (17) de sorte que le clapet (16) décrit une rotation d'un angle ß.

6. Unité de commande de température selon la revendication 5, **caractérisée en ce que** l'angle α de l'actionneur (18) est plus grand que l'angle ß du clapet.
